# EUROPEAN PATENT SPECIFICATION

(11) **EP 4 164 045 B1**
(45) Date of publication and mention of the grant of the patent: **21.10.2026**
(21) Application number: 22746238.9
(22) Date of filing: 27.01.2022
(51) Int. Cl.: H01M 50/451, H01M 50/411, H01M 10/42, H01M 50/449, H01M 50/403, B05D 1/20, H01M 50/431, H01M 50/489, H01M 10/052, B05D 7/04

(54) **SEPARATOR FOR LITHIUM SECONDARY BATTERY AND MANUFACTURING METHOD THEREFOR**
SEPARATOR FÜR LITHIUMSEKUNDÄRBATTERIE UND HERSTELLUNGSVERFAHREN DAFÜR
SÉPARATEUR POUR PILE RECHARGEABLE AU LITHIUM ET SON PROCÉDÉ DE FABRICATION

(30) Priority: 27.01.2021 KR 20210011577
(43) Date of publication of application: 12.04.2023
(73) Proprietor: LG Energy Solution, Ltd., Seoul 07335 (KR); Industry-Academic Cooperation Foundation, Yonsei University, Seoul 03722 (KR)
(72) Inventor: KIM, Ilto, Daejeon 34122 (KR); SOHN, Kwonnam, Daejeon 34122 (KR); LEE, Changhoon, Daejeon 34122 (KR); KIM, Jiwon, Seoul 03004 (KR); KIM, Geonho, Jeonju-si, Jeollabuk-do 55014 (KR); KIM, Dongjun, Incheon 21982 (KR); PARK, Jihyeon, Incheon 21968 (KR); OH, Seoyeah, Bucheon-si, Gyeonggi-do 14631 (KR); YOON, Seoyoung, Cheonan-si, Chungcheongnam-do 31163 (KR); LEE, Jiyeon, Cheongju-si, Chungcheongbuk-do 28121 (KR)
(74) Representative: Goddar, Heinz J.
(86) International application number: PCT/KR2022/001439
(87) International publication number: WO 2022/164212

(56) References cited:
- CN-A- 108 467 502
- CN-A- 108 467 502
- CN-A- 110 729 439
- CN-A- 111 430 640
- CN-A- 111 682 147
- KR-A- 20170 078 893
- KR-A- 20190 001 215
- KR-A- 20200 021 217
- KR-A- 20200 021 217
- US-A1- 2020 235 363
- RIE MAKIURA ET AL: "Surface nano-architecture of a metal-organic framework", NATURE MATERIALS, vol. 9, no. 7, 30 May 2010 (2010-05-30), London, pages 565 - 571, XP055536468, ISSN: 1476-1122, DOI: 10.1038/nmat2769
- MENGLIU LI: "Metal-Organic Framework-Based Separators for Enhancing Li-S Battery Stability: Mechanism of Mitigating Polysulfide Diffusion", ACS ENERGY LETTERS, vol. 2, no. 10, 15 September 2017 (2017-09-15), American Chemical Society, pages 2362 - 2367, XP093152010, ISSN: 2380-8195, DOI: 10.1021/acsenergylett.7b00692

## Description

### [Technical Field]

The present application claims the benefit of priority based on Korean Patent Application No. 2021-0011577 filed on January 27, 2021.

The present disclosure relates to a separator for a lithium secondary battery and a manufacturing method thereof.

### [Background Art]

A lithium-sulfur (Li-S) secondary battery which is an energy storage device has a theoretical energy density of 2600 Wh/kg and a theoretical capacity of 1672 mAh/g, and is receiving attention as a next-generation energy storage device because it exhibits an energy density that is 3 to 5 times higher than that of a conventional lithium battery. However, the lithium-sulfur secondary battery has a problem in that the cycle characteristics are not good for commercial use.

The poor cycle characteristics of the lithium-sulfur secondary battery are due to the shuttle phenomenon caused by polysulfide leaching from the positive electrode. In order to effectively suppress the shuttle phenomenon occurring in the lithium-sulfur secondary battery, it is necessary to prevent leaching of lithium polysulfide, an intermediate product in the reaction, to the negative electrode.

In general, since the transfer, exchange and the like of materials between the positive electrode and the negative electrode in the battery are performed through the separator, cycle characteristics of the lithium-sulfur secondary battery can be also controlled by the separator.

Chinese Laid-open Patent Publication No. 110729439 relates to a separator for a lithium-ion battery in which MOFs are coated on the surface of a polyolefin separator, which can exhibit the effect of improving the stability of the battery due to the polyolefin separator coated with MOFs as described above.

Korean Laid-open Patent Publication No. 2016-0126503 relates to a composite separator for a lithium secondary battery, in which a multi-layered metal compound layer is formed on the surface of a porous polymer substrate by atomic layer deposition (ALD).

As such, conventionally, when manufacturing the separator, a method of coating using already grown crystals was adopted instead of coating using Langmuir-Blodgett. In the case of coating using already grown crystals, how uniformly the coating is formed is determined by the spacing between the crystals (several hundred nanometers to several micrometers), but this has a disadvantage that it is difficult to obtain the influence of the pore size (several angstroms) of the crystal forming the coating. In addition, the conventional coating method may have a problem that when the separator is formed, a non-uniform coating can be formed and the thickness becomes thick, which acts as a resistance during the operation of the battery.

As described above, according to the existing separator manufacturing method, there is a limit in forming a uniform and thin coating layer, and accordingly, it is necessary to develop a separator manufacturing technology that can form a uniform and thin coating layer on the separator to minimize the resistance of the battery and prevent the shuttle phenomenon.

### [Prior Art Document]

### [Patent Document]

(Patent Document 1) Chinese Patent Application Publication No. 110729439
(Patent Document 2) Korean Patent Application Publication No. 2016-0126503

Moreover, relevant prior art related to separators coated with MOFs is highlighted in CN 111 682 147 A, US 2020/235363 A1, CN 111 430 640 A, XP055536468, KR 2020 0021217 A, XP093152010 and CN 108 467 502 A.

### [Disclosure]

### [Technical Problem]

Therefore, the present disclosure intends to provide a separator which can prevent the shuttle phenomenon caused by lithium polysulfide which is an intermediate product produced by polysulfide leached from a positive electrode of a lithium-sulfur secondary battery.

Therefore, it is an object of the present disclosure to provide a separator for lithium secondary batteries that has high permeability to lithium ions and can effectively suppress permeation of lithium polysulfide, and a method for manufacturing the same.

### [Technical Solution]

In order to achieve the above object, the present disclosure provides a separator for a lithium secondary battery comprising a porous substrate and a MOF (metal organic frameworks) layer formed on one or both surface of the porous substrate, wherein the MOF layer includes one or more MOF molecular films and has an amorphous structure.

The present disclosure also provides a method for manufacturing a separator for a lithium secondary battery comprising the steps of (S1) forming a MOF molecular film by mixing an aqueous solution containing zinc precursors and an organic solution containing organic ligand precursors; and (S2) depositing the MOF molecular film on the surface of a porous substrate, wherein the deposition is carried out by the Langmuir-Blodgett method.

### [Advantageous Effects]

The separator for the lithium secondary battery according to the present disclosure can prevent a shuttle phenomenon caused by polysulfide that may occur in a battery including a sulfur-containing material as a positive electrode active material, thereby improving cycle performance of the battery.

### [Description of Drawings]

FIG. 1 is a schematic diagram of a manufacturing process of the lithium-sulfur secondary battery according to the present disclosure.
FIG. 2 shows a photograph and a scanning electron microscope (SEM) photograph of a SiO₂ substrate having its partial surface coated by a Langmuir-Blodgett method.
FIG. 3 is a graph (2-theta-scale) showing the results of XRD analysis of the MOF layer deposited on the porous substrate of the separator by a Langmuir-Blodgett method, wherein the number of depositions is 1 (1 layer), 5 (5 layers) and 20 (20 layers), respectively.
FIG. 4 is a graph showing the results of FT-IR analysis of terephthalic acid used as an organic ligand precursor and the MOF layer (Langmuir Layer) in Example 1.
FIG. 5 is a graph showing the correlation between molecular spacing and surface tension when the MOF-5 molecular film is formed at room temperature.
FIG.6a is a photograph of a longitudinal cross-section of the MOF layer formed in the separator of Example 1 and a graph showing its thickness, and FIG. 6b is an AFM photograph showing the surface characteristics depending on the number of deposition processes in the MOF layer formed by a Langmuir-Blodgett method.
FIG. 7 is a photograph showing the results of an experiment for the effect of the MOF materials on filtering polysulfide.
FIG. 8 is a graph showing the results of experiments on long-term cycle performance of the lithium-sulfur secondary batteries of Examples 1 and 2 and Comparative Example 1.

### [Best Mode]

Hereinafter, the present disclosure will be described in more detail to help the understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

As used herein, the term "Langmuir-Blodgett (LB)" is a technique for forming a thin film layer on the supporter by transferring the thin film layer to the supporter while the supporter passes the thin film layer made of the monomolecular film vertically. According to the Langmuir-Blodgett method, it is possible to deposit a thin film layer arranged at high density on a supporter.

### Separator for lithium secondary battery

The present disclosure relates to a separator for a lithium secondary battery, according to the independent claim 1.

Generally, in a lithium secondary battery containing a sulfur-containing material as a positive electrode active material, there is a problem that during charging and discharging, polysulfide is leached from the positive electrode, lithium polysulfide (LiPS) is generated due to a side reaction of the leached polysulfide, and the shuttle phenomenon occurs by LiPS, thereby lowering cycle stability of the battery.

In order to suppress such shuttle phenomenon, it is advantageous for the separator to have physical properties capable of suppressing the leaching of LiPS by suppressing the permeation of LiPS.

In the present disclosure, the porous substrate comprised in the separator for the lithium secondary battery enables transport of lithium ions between the positive electrode and the negative electrode while separating or insulating the negative electrode and the positive electrode from each other. Accordingly, the separator of the present disclosure may be made of a porous, non-conductive or insulating material.

Specifically, the porous substrate may be a porous polymer film alone or a laminate of porous polymeric films, and for example, may be a non-woven fabric made of glass fiber or polyethyleneterephthalate fiber with high melting point, etc., or a polyolefin-based porous film, but is not limited thereto.

The material of the porous substrate is not particularly limited in the present disclosure, and any material can be used as long as it is a porous substrate commonly used in an electrochemical device. For example, the porous substrate may comprise one or more selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole, and polyarylate.

In addition, the thickness of the porous substrate is not particularly limited, but may be 1 *µ*m to 100 *µ*m, and specifically may be 1 *µ*m or more, 5 *µ*m or more, or 10 *µ*m or more, and 50 *µ*m or less, 60 *µ*m or less, 70 *µ*m or less, 80 *µ*m or less, or 100 *µ*m or less. Although the thickness range of the porous substrate is not particularly limited to the above-mentioned range, if the thickness is excessively thinner than the lower limit described above, mechanical properties are deteriorated and thus the separator may be easily damaged during use of the battery.

In the present disclosure, the MOF layer included in the separator for the lithium secondary battery can physically inhibit the leaching of LiPS by adjusting the pore size. In addition, when the MOF is doped with a hetero atom, it can adsorb LiPS, or can also electrically inhibit the leaching of LiPS through electrical repulsion between the separator and LiPS.

According to the invention, MOF is doped with a hetero atom, the hetero atom comprises one or more selected from the group consisting of N, S, and O. The N, S or O may increase the adsorption efficiency of LiPS.

In addition, the MOF layer may include one or more layers of the MOF molecular film, and specifically, the one or more layers of the MOF molecular film may be laminated.

According to the invention, the thickness of the MOF layer is 0.5 nm to 20 nm, and specifically may be 0.5 nm or more, 0.8 nm or more, or 1 nm or more, and 10 nm or less, 15 nm or less, or 20 nm or less. If the thickness of the MOF layer is less than 0.5 nm, it may be difficult to form the MOF layer itself. If the thickness of the MOF layer is more than 20 nm, the resistance of the battery increases, it takes a lot of time to synthesize the MOF, and the uniformity of the MOF layer may be deteriorated.

Also, the MOF layer has an amorphous structure.
The MOF layer of the amorphous structure has an advantage that it may better withstand physical deformation than the MOF layer of the crystalline structure.

In addition, the MOF layer may have a uniform surface. Specifically, among the surface roughness, Rq may be 0 nm to 1.0 nm, and Ra may be 0 nm to 1.0 nm. Specifically, Rq may be 0 nm or more, 0.1 nm or more, or 0.3 nm or more, and 0.4 nm or less, 0.7 nm or less, or 1.0 nm or less, and Ra may be 0 nm or more, 0.2 nm or more, or 0.3 nm or more, and 0.6 nm or less, 0.8 nm or less, or 1.0 nm or less. If Rq or Ra is out of the above range, the surface properties of the MOF layer are not good, which may adversely affect the lifetime of the battery. In the case of Ra and Rq, the lower the numerical value is, the higher the uniformity is.

Rq is the mean square surface roughness, Ra means the arithmetic surface roughness, and these can be measured using the specimen of the MOF layer by an atomic force microscope (AFM).

### Method for manufacturing separator for lithium secondary battery

The present disclosure also relates to a method for manufacturing a separator for a lithium secondary battery, the method comprising the steps of forming a MOF molecular film by mixing an aqueous solution containing zinc precursors and an organic solution containing organic ligand precursors; and depositing the MOF molecular film on the surface of a porous substrate, wherein the depositing the MOF molecular film may be performed by a Langmuir-Blodgett (LB) method, according to the independent claim 3.

Hereinafter, the manufacturing method of the separator for the lithium secondary battery according to the present disclosure will be described in detail for each step.

In step (S1), an aqueous solution containing zinc precursors and an organic solution containing organic ligand precursors may be mixed to form a MOF molecular film.

At the time of mixing, if the organic solution containing organic ligand precursors are mixed in a dropwise manner to an aqueous solution containing zinc precursors, it may be more advantageous for the formation of a MOF molecular film. If simple mixing is performed instead of the dropwise manner, a three-dimensional crystal MOF may be formed instead of a two-dimensional molecular film being formed on the surface of the aqueous solution, and thus it can be difficult to coat by the Langmuir-Blodgett (LB).

If an organic ligand dissolved in a volatile organic solvent is dropped onto the aqueous solution containing zinc precursors, the organic solvent is volatilized, the ligand is synthesized only on the surface of the aqueous solution, and the reaction is restricted to only a two-dimensional phase to form a molecular film.

The zinc precursor may be one or more selected from the group consisting of zinc acetate and zinc nitrate, and the zinc precursor may be zinc acetate in terms of the formation efficiency of the MOF molecular film. In addition, if the zinc nitrate is used, it may be used in an aqueous solution containing zinc nitrate and trimethylamine.

In addition, the concentration of the aqueous zinc precursor solution may be 0.002M to 0.01M, and specifically may be 0.002M or more, or 0.003M or more, and 0.006M or less, 0.008M or less, or 0.01M or less. If the concentration of the aqueous zinc precursor solution is less than 0.002M, the MOF layer is not sufficiently formed, and if the concentration of the aqueous zinc precursor solution is greater than 0.01M, surface roughness characteristics may be deteriorated.

In addition, the organic ligand precursor may comprise one or more selected from the group consisting of terephthalic acid, 2-aminoterephthalic acid, 2-Hydroxyterephthalic acid and 2,5-dimercaptoterephthalic acid), and in terms of the formation efficiency of the MOF molecular film, the organic ligand precursor may be terephthalic acid or 2-aminoterephthalic acid.

The organic solution containing organic ligand precursors may be prepared by dissolving the organic ligand precursor in an organic solvent.

The organic solvent may be one or more non-polar solvent selected from the group consisting of chloroform, cyclohexane, n-hexane and toluene, but is not limited thereto, and a non-polar solvent that allows a two-dimensional MOF molecular film to be synthesized on the surface of the aqueous zinc precursor solution can be widely used.

In the case of the organic ligand precursor solution, since the ligand exhibits a property that is hardly soluble in the organic solvent, it is preferable to use a saturated solution. If the concentration is lower than the saturated solution, it may be difficult to form the MOF layer. Concentrations higher than saturated solutions may not be achievable due to a physical limitation.

In step (S2), by using the Langmuir-Blodgett method, the MOF molecular film can be deposited on the surface of the porous substrate. At this time, the type and physical properties of the porous substrate are the same as described above.

The MOF molecular film formed in step (S1) is in a floating state on the surface of the solution, and the floating MOF molecular film can be deposited on the surface of the porous substrate.

According to the Langmuir-Blodgett method, by using an aqueous solution containing metal ions and a volatile organic solvent that does not mix with the aqueous solution, the metal ions in the aqueous solution and the organic ligand precipitated after the organic solvent is volatilized immediately combine to form a MOF layer on the surface of the aqueous solution. In this case, the organic ligand should have good reactivity, and in consideration of this point, the types of the organic solvent and the ligand may be specified as described above.

If the porous substrate is passed through the MOF molecular film formed in step (S1) in a vertical direction, the MOF molecular film is moved to the porous substrate, and a MOF layer can be formed on the cross section of the porous substrate.

The MOF molecular film formed using the Langmuir-Blodgett method may be formed with a thin thickness. In general, the self-assembled film is thick with a thickness of at least several micrometers, whereas the MOF molecular film formed by the Langmuir-Blodgett method may be formed as a thin layer with a thickness of several nanometers. Therefore, the separator including the MOF molecular film formed by the Langmuir-Blodgett method can contribute to the miniaturization and weight reduction of the battery.

In addition, in the case of the MOF molecular film, the physical adsorption characteristics may be determined by the spacing between molecules rather than the pore characteristics of the molecules. For example, in addition to the crystal size and shape of the MOF, the density coated on the surface of the substrate is changed, which may cause performance differences in the battery (Electrochim. Acta, 2014, 129, 55-61; J. Power Sources, 2018, 389, 169-177; ACS Energy Letters, 2017, 2, 2362-2367). Therefore, it is possible to easily control the size and shape of the MOF crystal applicable to the Langmuir-Blodgett method, which may be advantageous in controlling the performance of the battery.

In addition, there is a problem that a general atomic layer deposition (ALD) mainly synthesizes metal oxide, and it is difficult to use in the synthesis of a MOF molecular film for application to a separator. Since ALD requires a high-temperature process, it is difficult to apply to plastic-based separators where heat shrinkage occurs at high temperatures, whereas the Langmuir-Blodgett method does not involve the high-temperature process, so it can be applied to the manufacture of the separator.

### Lithium secondary battery

The present disclosure also relates to a lithium secondary battery comprising the separator as described above , according to claim 7.

The lithium secondary battery according to the present disclosure may comprise a positive electrode, a negative electrode, a separator between the positive electrode and the negative electrode, and an electrolyte solution.

In the present disclosure, the positive electrode of the lithium secondary battery may comprise a positive electrode current collector, and a positive electrode mixture layer having a positive electrode active material formed on the positive electrode current collector.

As the positive electrode active material, a lithiumcontaining transition metal oxide may be preferably used, and for example, may be any one selected from the group consisting of LiCoO₂, LiNiO₂, LiMnO₂, LiMn₂O₄, Li(NiₐCo_{b}Mn_{c})O₂(0<a<1, 0<b<1, 0<c<1, a+b+c=1), LiNi_{1-y}Co_{y}O₂, LiCo_{1-y}Mn_{y}O₂, LiNi_{1-y}Mn_{y}O₂(O≤y<1), Li(NiₐCo_{b}Mn_{c})O₄(0<a<2, 0<b<2, 0<c<2, a+b+c=2), LiMn_{2-z}Ni_{z}O₄, LiMn_{2-z}Co_{z}O₄(0<z<2), LiCoPO₄ and LiFePO₄ or a mixture of two or more thereof. Also, in addition to these oxides, sulfides, selenides, halides and the like can also be used.

In addition, the positive electrode current collector is not particularly limited as long as it has a high electrical conductivity without causing chemical changes in the relevant battery, and for example, stainless steel, aluminum, nickel, titanium, sintered carbon, or aluminum, or stainless steel surface-treated with carbon, nickel, titanium, silver or the like may be used. In this case, the positive electrode current collector may be formed in various forms such as film, sheet, foil, net, porous body, foam, or nonwoven fabric having fine irregularities formed on its surface in order to enhance the bonding force with the positive electrode active material.

In the present disclosure, the negative electrode of the lithium secondary battery may comprise a negative electrode current collector, and a negative electrode mixture layer having a negative electrode active material formed on the negative electrode current collector.

As the negative electrode active material, a carbon material, lithium metal, silicon, tin, or the like, in which lithium ions may be intercalated and deintercalated, may be used. Preferably, a carbon material may be used, and as the carbon material, both low crystalline carbon and high crystalline carbon may be used. The low crystalline carbon is typically soft carbon and hard carbon. The high crystalline carbon is typically natural graphite, Kish graphite, pyrolytic carbon, mesophase pitch-based carbon fiber, meso-carbon microbeads, mesophase pitches, and high-temperature calcined carbons such as petroleum or coal tar pitch derived cokes. In this case, the negative electrode may comprise a binder. The binder may be various kinds of binder polymers such as vinylidene fluoridehexafluoropropylene copolymer (PVDF-co-HFP), polyvinylidene fluoride, polyacrylonitrile, polymethylmethacrylate, and the like.

In addition, the negative electrode current collector is not particularly limited as long as it has an electrical conductivity without causing chemical changes in the relevant battery, and for example, copper, stainless steel, aluminum, nickel, titanium, sintered carbon, or copper, or stainless steel surface-treated with carbon, nickel, titanium, silver or the like, or aluminum-cadmium alloy may be used. Also, the negative electrode current collector may be formed in various forms such as film, sheet, foil, net, porous body, foam, or nonwoven fabric, having fine irregularities formed on its surface like the positive electrode current collector.

At this time, the positive electrode mixture layer or negative electrode mixture layer may further comprise a binder resin, an electrically conductive material, a filler, and other additives.

The binder resin is used for the bonding of the electrode active material and the electrically conductive material and for the bonding to the current collector. Examples of such binder resin may comprise polyvinylidene fluoride (PVDF), polyvinyl alcohol, carboxymethylcellulose (CMC), starch, hydroxypropyl cellulose, regenerated cellulose, polyvinyl pyrrolidone, tetrafluoroethylene, polyethylene, polypropylene, ethylene-propylene-diene polymer (EPDM), sulfonated-EPDM, styrene-butadiene rubber, fluorine rubber, and various copolymers thereof.

The electrically conductive material is used to further improve the electrical conductivity of the electrode active material. The electrically conductive material is not particularly limited as long as it has electrical conductivity without causing chemical changes in the relevant battery, and for example, graphite such as natural graphite or artificial graphite; carbon blacks such as carbon black, acetylene black, Ketjen black, channel black, furnace black, lamp black, and thermal black; electrically conductive fibers such as carbon fiber and metal fiber; metal powders such as carbon fluoride, aluminum and nickel powder; electrically conductive whiskers such as zinc oxide and potassium titanate; electrically conductive metal oxides such as titanium oxide; polyphenylene derivative can be used.

The filler is selectively used as a component for suppressing the expansion of the electrode and is not specifically limited as long as it is a fibrous material without causing chemical change in the relevant battery, and for example, includes olefin-based polymers such as polyethylene and polypropylene; and fibrous materials such as glass fiber and carbon fiber.

In the present disclosure, the electrolyte solution may be a nonaqueous electrolyte solution, and the electrolyte salt contained in the nonaqueous electrolyte solution is a lithium salt. The lithium salt is not particularly limited as long as it can be conventionally used in electrolyte solution for a lithium secondary battery. For example, the lithium salt may be one or more selected from the group consisting of LiFSI, LiPF₆, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₆, LiAlCl₄, CH₃SO₃Li, CF₃SO₃Li, (CF₃SO₂)₂NLi, lithium chloroborane, and 4-phenyl lithium borate.

As the organic solvent contained in the nonaqueous electrolyte solution, those conventionally used in an electrolyte solution for a lithium secondary battery may be used without limitation, and for example, ether, ester, amide, linear carbonate, cyclic carbonate, etc. may be used alone or in combination of two or more. Among them, representatively, carbonate compounds that are cyclic carbonates, linear carbonates, or slurries thereof may be comprised.

Specific examples of the cyclic carbonate compound may comprise one or more selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a slurry of two or more thereof. Examples of such halides comprise, but are not limited to, fluoroethylene carbonate (FEC) and the like.

In addition, specific examples of the linear carbonate compound may representatively comprise, but is not limited to, one or more selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof. Particularly, among the carbonate-based organic solvents, ethylene carbonate and propylene carbonate which are cyclic carbonates are highly viscous organic solvents and have a high dielectric constant, and thus can dissociate lithium salts in the electrolyte much better. When these cyclic carbonates are mixed with linear carbonates with a low viscosity and a low dielectric constant, such as dimethyl carbonate and diethyl carbonate, at a suitable ratio, an electrolyte solution having the higher electrical conductivity can be prepared.

In addition, the ether among the above organic solvents may be, but is not limited to, any one selected from the group consisting of dimethyl ether, diethyl ether, dipropyl ether, methylethyl ether, methylpropyl ether and ethylpropyl ether, or a slurry of two or more thereof.

In addition, the ester among the above organic solvents may be, but is not limited to, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a slurry of two or more thereof.

The injection of the non-aqueous electrolyte solution can be performed at an appropriate stage during the manufacturing process of the electrochemical device, depending on the manufacturing process and required physical properties of the final product. That is, such injection can be carried out before assembling the electrochemical device or in the final stage of assembling the electrochemical device.

In the case of the lithium secondary battery according to the present disclosure, it is possible to perform laminating or stacking and folding processes of the separator and the electrode, in addition to the winding process which is a general process.

In addition, the shape of the battery case is not particularly limited, and may be of various shapes such as a cylindrical shape, a laminate shape, a square shape, a pouch shape, or a coin shape. The structure and manufacturing method of these batteries are widely known in the art, and thus detailed description thereof will be omitted.

In addition, the lithium secondary battery may be classified into various batteries, such as a lithium-sulfur secondary battery, a lithium-air battery, a lithium-oxide battery, and a lithium all-solid battery, depending on the positive electrode/negative electrode material used.

In addition, the present disclosure provides a battery module including the lithium secondary battery as a unit cell.

The battery module may be used as a power source of medium or large-sized devices requiring high temperature stability, long cycle characteristics, and high-capacity characteristics.

Examples of the medium or large-sized devices may comprise, but are not limited to, a power tool that is powered and moved by an electric motor; electric cars including an electric vehicle (EV), a hybrid electric vehicle (HEV), a plug-in hybrid electric vehicle (PHEV), and the like; an electric motorcycle including an electric bike (E-bike) and an electric scooter (E-scooter); an electric golf cart; and a power storage system.

### Lithium-sulfur secondary battery

The separator according to the present disclosure can be applied as a separator for a lithium-sulfur secondary battery among lithium secondary batteries. For example, it may be applied to the positive electrode for the lithium-sulfur secondary battery in a form in which the positive electrode active material is supported inside the porous carbon precursor.

In this case, the lithium-sulfur secondary battery may be a battery including sulfur as a positive electrode active material. Specifically, the positive electrode active material may comprise elemental sulfur (S₈), a sulfur-based compound, or a mixture thereof. The sulfur-based compound may specifically comprise Li₂Sₙ(n≥1), an organic sulfur compound or a carbon-sulfur polymer ((C₂Sₓ)ₙ: x=2.5~50, n≥2).

In the case of these sulfur materials, since they do not have electrical conductivity alone, they may also be used in the positive electrode of a lithium-sulfur secondary battery in the form of a sulfur-carbon composite formed by complexing with a carbon material.

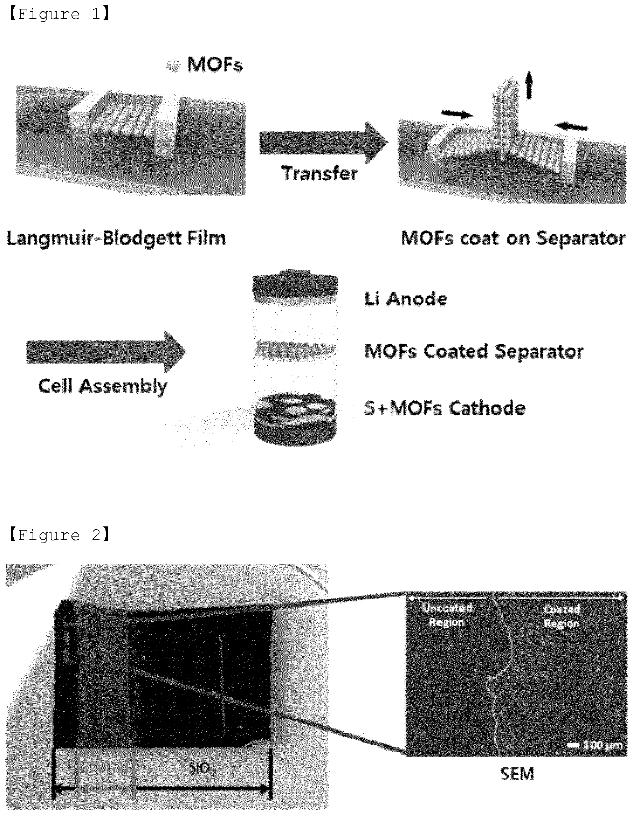

FIG. 1 is a schematic diagram of a manufacturing process of the lithium-sulfur secondary battery according to the present disclosure.

Referring to FIG. 1, a lithium-sulfur secondary battery can be manufactured by forming a MOF molecular film (Langmuir-Blodgett Film), and then forming a MOF layer on both surfaces of the porous substrate and assembling the cell.

Hereinafter, preferred examples of the present disclosure will be described in order to facilitate understanding of the present disclosure. It will be apparent to those skilled in the art, however, that the following examples are illustrative of the present disclosure

### Preliminary Experimental Example 1: Confirmation of whether a coating layer is formed by the Langmuir-Blodgett method.

An experiment was conducted to determine whether a coating layer can be formed on a substrate by using the Langmuir-Blodgett method.

Terephthalic acid, which is an organic ligand precursor, was dissolved in a chloroform solvent to prepare a saturated solution of organic ligand precursor.

Zinc acetate, which is a zinc precursor, was dissolved in water to prepare an aqueous zinc precursor solution with a concentration of 0.002 M.

The organic ligand precursor solution was added dropwise to the aqueous zinc precursor solution to form a MOF-5 molecular film.

Using a Langmuir-Blodgett machine (KSV NIMA, KN2002), the MOF-5 material was coated on some surfaces of the SiO₂ substrate.

FIG. 2 shows the photograph and scanning electron microscope (SEM) photograph of the SiO₂ substrate having its partial surface coated by Langmuir-Blodgett method, from which it can be seen that a coating layer can be formed by the Langmuir-Blodgett method. In this case, the SEM photograph was taken using a scanning electron microscope (JEOL Ltd., JSM-7100F).

From the results of Preliminary Experimental Example 1, it was confirmed that a coating layer could be formed on the porous substrate using the Langmuir-Blodgett. Accordingly, in the following Examples and Comparative Examples, various types of separators were prepared using the Langmuir-Blodgett according to the composition shown in Table 1 below.

**Table 1:**

| | Separator | | Raw material for MOF layer | | Method for forming MOF layer |
|---|---|---|---|---|---|
| | Porous substrate | MOF layer | Organic ligand precursor | Zinc precursor | |
| Example 1 | PP | MOF-5 | terephthalic acid | zinc acetate | Langmuir-Blodgett |
| Example 2 | PP | IRMOF-3 | 2-aminoterephthalic acid | zinc acetate | Langmuir-Blodgett |
| Comparative Example 1 | PP | - | terephthalic acid | zinc acetate | - |
| Comparative Example 2 | PP | MOF-5 | terephthalic acid | zinc acetate | Doctor Blade coating |

### Example 1

### (1) Manufacture of separator

### (1-1) Formation of MOF molecular film

Terephthalic acid, which is an organic ligand precursor, was dissolved in a chloroform solvent to prepare a saturated solution of organic ligand precursor.

Zinc acetate, which is a zinc precursor, was dissolved in water to prepare an aqueous zinc precursor solution with a concentration of 0.002 M.

The organic ligand precursor solution was added dropwise to the aqueous zinc precursor solution to form a MOF-5 molecular film.

### (1-2) Deposition of MOF layer on porous substrate

A porous substrate, which is made of polypropylene (PP) and has 50% porosity, as a porous substrate was prepared as a separator.

Using a Langmuir-Blodgett machine (KSV NIMA, KN2002), the PP separator was passed through the MOF-5 molecular film in a vertical direction to deposit a MOF-molecular film

This deposition process was performed 5 times to prepare a separator in which a MOF-5 molecular film was formed on both surfaces of the PP separator.

### (2) Manufacture of lithium-sulfur secondary battery

The separator was placed between a positive electrode and a negative electrode and thus positioned inside a case, and then the electrolyte solution was injected into the inside of the case to prepare a lithium-sulfur secondary battery in the form of a CR-2032 coin cell. At this time, the positive electrode was prepared by coating a slurry for a positive electrode, which was formed by mixing a positive electrode active material, an electrically conductive material (Super P) and a binder (styrene-butadiene rubber, SBR) in a weight ratio of 80:10:10, on Al foil, and drying and rolling them. The positive electrode active material is an S/MOF-5 composite obtained by mixing sulfur (product from Sigma-Aldrich) with carbonized MOF-5 using a ball mill and then heat-treating them at 155 °C. As the negative electrode, a lithium foil was used, and the electrolyte solution was obtained by dissolving 0.3 M LiNO₃ and 1M LiTFSi in a mixed solvent of DOL and DME (DOL:DME=1:1 (v/v)) (DOL: Dioxolane, DME: Dimethoxyethane).

### Example 2

A separator and a lithium-sulfur secondary battery were manufactured in the same manner as in Example 1, except that 2-aminoterephthalic acid was used instead of terephthalic acid as an organic ligand precursor.

### Comparative Example 1

A separator and a lithium-sulfur secondary battery were manufactured in the same manner as in Example 1, except that as a separator, a PP separator with no MOF layer was used.

### Comparative Example 2

A separator and a lithium-sulfur secondary battery were manufactured in the same manner as in Example 1, except that a MOF layer was formed on a porous substrate by a method of coating a solution formed by mixing MOF, PVDF binder and NMP using a doctor blade, instead of the Langmuir-Blodgett.

### Experimental Example 1: Analysis of structure of MOF layer

In order to confirm the crystal structure of the MOF layer formed on the porous substrate of the separator, an X-ray diffraction (XRD) analysis and a Fourier-transform infrared spectroscopy (FT-IR) analysis were performed.

### 1-1. X-ray Diffraction (XRD) analysis

A separator was prepared in the same manner as in Example 1 by depositing a MOF molecular film on the porous substrate by the Langmuir-Blodgett method, but the deposition was performed 1 time, 5 times, and 20 times, respectively, to prepare the separator and a lithium-sulfur secondary battery.

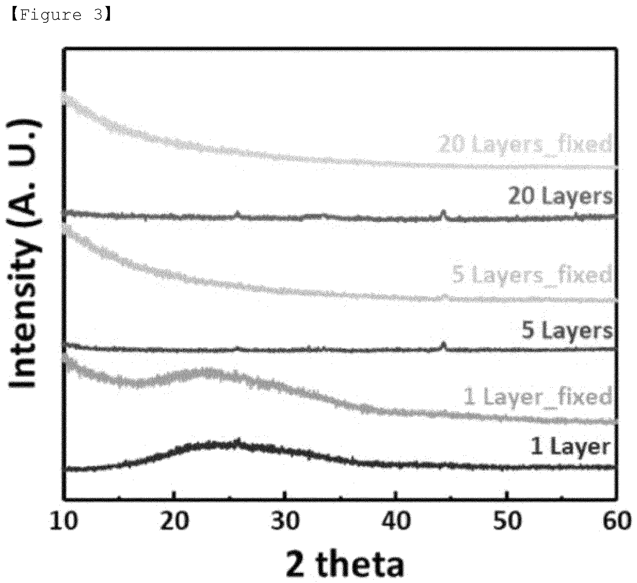

FIG. 3 is a graph (2-theta-scale) showing the results of XRD analysis of the MOF layer deposited on the porous substrate of the separator by Langmuir-Blodgett method, wherein the number of depositions is 1 (1 layer), 5 (5 layers) and 20 (20 layers), respectively.

As shown in FIG. 3, crystallinity was not observed in the MOF layer deposited on the porous substrate by the Langmuir-Blodgett method, and from this, it can be seen that the MOF layer is in an amorphous form.

### 1-2. FT-IR analysis

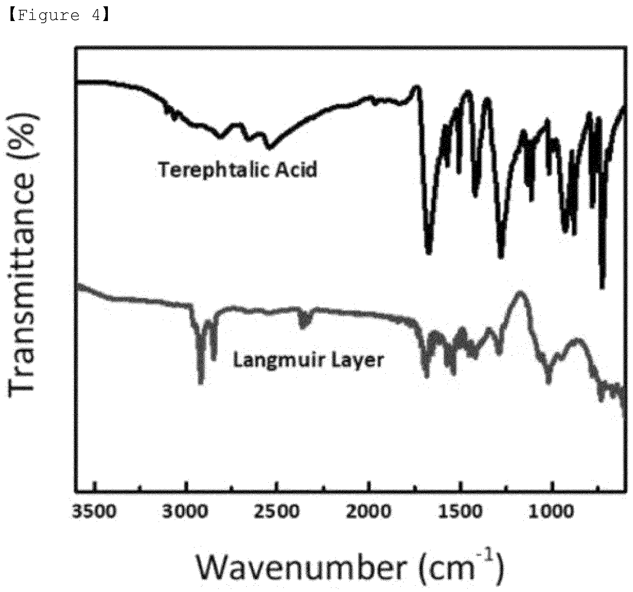

FIG. 4 is a graph showing the results of FT-IR analysis of terephthalic acid used as an organic ligand precursor and the MOF layer (Langmuir Layer) in Example 1. The results are measured in the wavelength range of 700 to 3600 nm.

As shown in FIG. 4, it can be seen that since the carboxylic acid spectrum (3300-2500 cm-1: O-H stretch, 1760-1960 cm-1: C=0 stretch,) of terephthalic acid used as an organic ligand precursor in Example 1 was maintained, and the shape of the peak was different, a new molecule different from the one before the reaction was synthesized.

From these results, it can be seen that the MOF layer has a two-dimensional structure without crystallinity in that the molecular structure is similar to that of the general MOF, but the peak of XRD does not appear.

### Experimental Example 2: Analysis of the formation conditions of the MOF layer

In order to confirm the surface tension conditions under which the MOF layer can be uniformly formed, an isotherm analysis was performed for MOF-5 at room temperature.

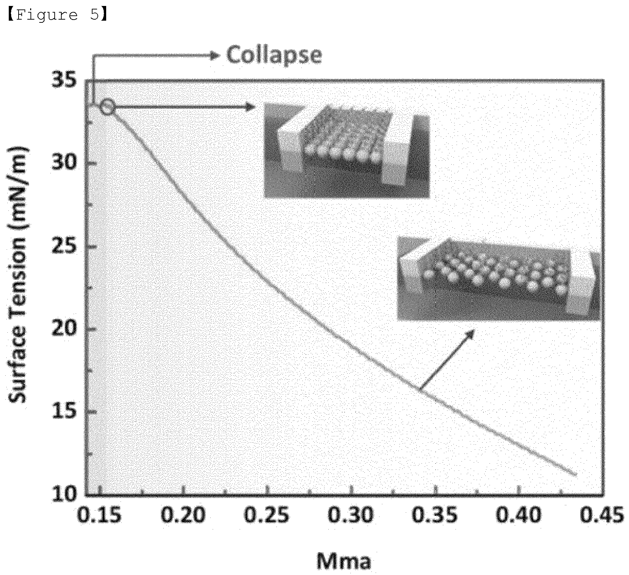

FIG. 5 is a graph showing the correlation between molecular spacing and surface tension when the MOF-5 molecular film is formed at room temperature.

As shown in FIG. 5, when forming the MOF-5 molecular film, the surface tension was increased as the spacing between molecules became narrower. When the surface tension was about 33 mN/m, there was a tendency that the surface tension did not increase any more, while molecules began to overlap. In the graph, Mma (mean molecular area) means the average area occupied by one molecule. As Mma becomes smaller, the area occupied is reduced, which means that the intermolecular spacing is reduced.

From these results, it can be seen that in order to form a uniform MOF-5 molecular film, it would be appropriate to form the MOF layer under a surface tension of 30 mN/m, which is the surface tension before the molecules overlap.

As the gap between the trough of Langmuir-Blodgett became narrower, the distance between monomolecules on the surface of the aqueous solution becomes narrower, and a monomolecular film is formed. If the distance between monomolecules becomes narrower, the surface tension of the isotherm graph is increased, but if the monomolecular films get too close and start to overlap, the surface tension is not increased, and thus the coating is proceeded under the condition of surface tension just before saturation.

### Experimental Example 3: Analysis of surface properties of MOF layer

In order to analyze the surface characteristics of the MOF layer, the surface roughness was analyzed using AFM (Atomic Force Microscope, Bruker company, Multimode IVa) photograph. At this time,

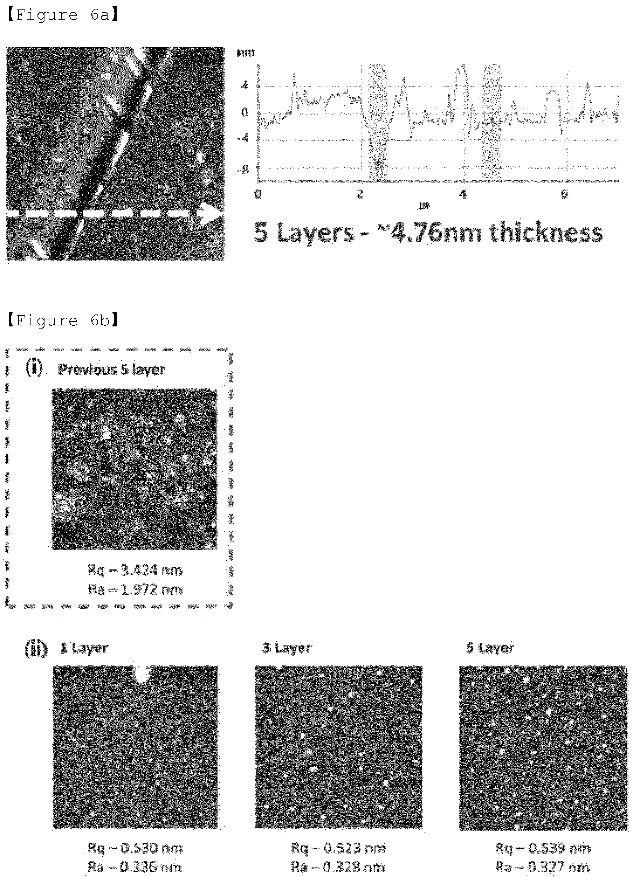

FIG.6a is a photograph of a longitudinal cross-section of the MOF layer formed in the separator of Example 1 and a graph showing its thickness.

Referring to FIG. 6a, it can be seen that the MOF layer formed by performing the deposition process 5 times by the Langmuir-Blodgett method has a maximum thickness of 4.76 nm.

FIG. 6b is an AFM photograph showing the surface characteristics depending on the number of deposition processes in the MOF layer formed by the Langmuir-Blodgett method. (i) of FIG. 6b shows the surface roughness of the MOF layer formed by performing the deposition process 5 times by the Langmuir-Blodgett method when confirmed that the organic solvent has evaporated by the naked eye (first condition) and (ii) of FIG. 6b shows the surface roughness of the MOF layer formed by performing deposition processes 1, 3, and 5 times by the Langmuir-Blodgett method for a reaction time of 30 minutes for a sufficient reaction (second condition) (Ra: Arithmetic surface roughness, Rq: Mean square surface roughness).

Referring to (i) and (ii) of FIG. 6b and Table 2 below, it can be seen that the surface roughness characteristics of the MOF layer formed by Langmuir-Blodgett by performing the deposition once, 3 times or 5 times under the second condition are remarkably improved, as compared to the case where the deposition process was performed 5 times under the first condition.

**Table 2:**

| Deposition condition | | First condition | Second condition | | |
|---|---|---|---|---|---|
| Number of depositions | | 5 times (5 layers) | 1 time (1 layer) | 3 times (3 layers) | 5 times (5 layers) |
| Surface roughness | Rq (nm) | 3.424 | 0.530 | 0.523 | 0.539 |
| | Ra (nm) | 1.972 | 0.336 | 0.328 | 0.327 |

### Experimental Example 4: Filtration test

A filtration test was performed to confirm the fertilizing effect of the MOF material on polysulfide.

Through doctor blade coating, separators were prepared in which MOF-5 and IRMOF-3 were uniformly coated with a thickness of 20 µm and 40 µm, respectively.

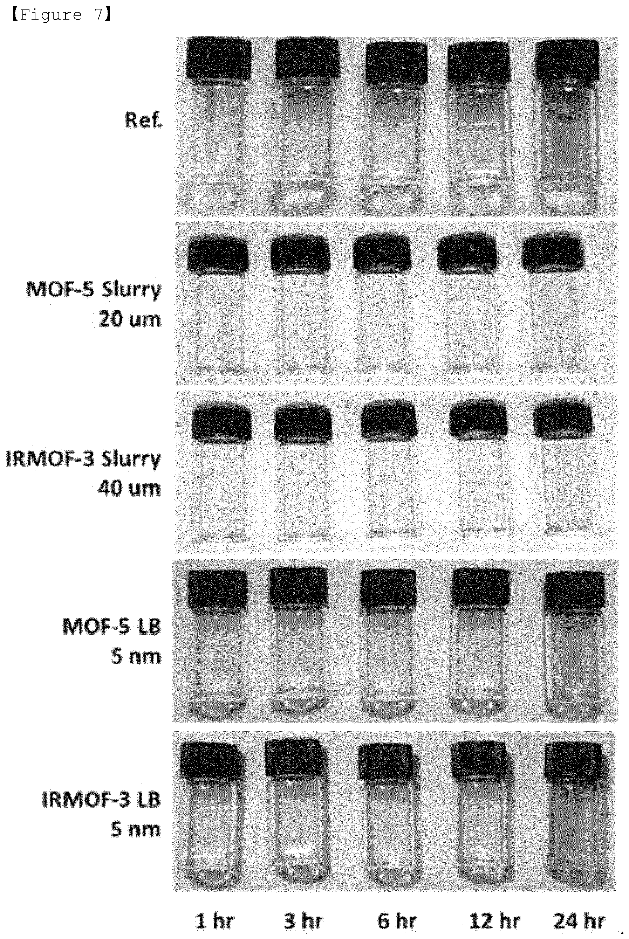

FIG. 7 is a photograph showing the results of an experiment for the effect of the MOF materials on filtering polysulfide.

FIG.7 is a picture showing the results of the filtration test of a separator (Ref, PP separator) that is not coated with MOF material, the MOF (MOF-5, IRMOF-3) coated separator manufactured through the coating of the doctor blade, and the MOF (MOF-5, IRMOF-3) coated separator manufactured through the Langmuir-Blodgett method. The filtration test was carried out for up to 24 hours.

It was confirmed that with the passage of time, there is an effect on filtering polysulfide in the separator coated with MOF manufactured through doctor blade coating. Even in the separator coated with the MOF layer prepared by the Langmuir-Blodgett method, it was confirmed that it was difficult to observe color change by polysulfide up to 12 hours, and even after 24 hours, there is a filtering effect compared to the conventional separator.

### Experimental Example 5: Comparison of long-term cycle performance of lithium-sulfur secondary batteries

In order to compare the long-term cycle performance of the lithium-sulfur secondary batteries of Examples 1 and 2 and Comparative Example 1, charging and discharging was performed for 20 cycles at 1C condition.

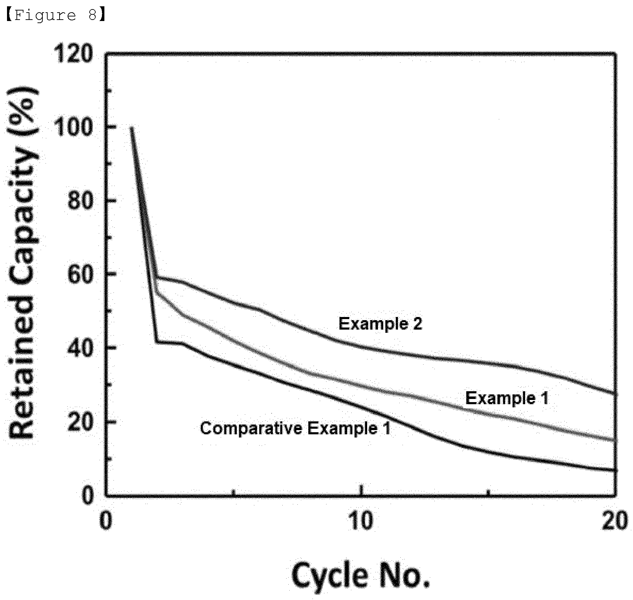

FIG. 8 is a graph showing the results of experiments on long-term cycle performance of lithium-sulfur secondary batteries of Examples 1 and 2 and Comparative Example 1.

As shown in FIG. 8, the discharge capacities of Comparative Example 1, Examples 1 and 2 after 20 cycles were 6.9%, 15.08%, and 27.47%, respectively, and thus it was confirmed that the batteries in Examples 1 and 2 with the MOF layer formed on the separator had good long-term cycle performance.

It can be seen that in the case of Example 1, a MOF-5 layer is formed on the separator to filter polysulfide with large molecules from moving from the positive electrode to the negative electrode, and in the case of Example 2, an IRMOF-3 layer is formed on the separator, and thus nitrogen electrically adsorbs polysulfide well, improving cycle performance.

## Claims

1. A separator for a lithium secondary battery, the separator comprising:
a porous substrate; and
a metal organic framework (MOF) layer formed on one or both surface(s) of the porous substrate,
wherein the MOF layer comprises one or more MOF molecular films and has an amorphous structure; and
wherein the metal organic framework contains zinc;
wherein the MOF is doped with one or more hetero atom selected from the group consisting of N, S, and O, and
wherein a thickness of the MOF layer is 0.5 nm to 20 nm.

2. The separator according to claim 1, wherein the porous substrate comprises one or more selected from the group consisting of polyolefin, polyester, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole, and polyarylate.

3. A method for manufacturing a separator for a lithium secondary battery according to claim 1, comprising:
(S1) forming a MOF molecular film by mixing an aqueous solution containing zinc precursors and an organic solution containing organic ligand precursors; and wherein the MOF is doped with one or more hetero atom selected from the group consisting of N, S, and O, and
(S2) depositing the MOF molecular film on one or both surface(s) of a porous substrate,
wherein the depositing the MOF molecular film is carried out by Langmuir-Blodgett method, resulting in the MOF layer with a thickness of 0.5 nm to 20 nm.

4. The method according to claim 3, wherein the zinc precursor comprises one or more selected from the group consisting of zinc acetate and zinc nitrate.

5. The method according to claim 3, wherein the organic ligand precursor comprises one or more selected from the group consisting of terephthalic acid, 2-aminoterephthalic acid, 2-Hydroxyterephthalic acid and 2,5-dimercaptoterephthalic acid.

6. The method according to claim 3, wherein the mixing is performed by dropping the organic solution obtained by dissolving the organic ligand precursor in an organic solvent into the aqueous solution containing the zinc precursor.

7. A lithium secondary battery comprising:
a positive electrode;
a negative electrode;
the separator of claim 1 between the positive electrode and the negative electrode; and
an electrolyte solution.

8. The lithium secondary battery according to claim 1, wherein the lithium secondary battery is a lithium-sulfur secondary battery.

## Patentansprüche

1. Separator für eine Lithium-Sekundärbatterie, wobei der Separator umfasst:
ein poröses Substrat; und
eine metallorganische Gerüstschicht (MOF-Schicht), die auf einer oder beiden Oberfläche(n) des porösen Substrats gebildet ist,
wobei die MOF-Schicht einen oder mehrere MOF-Molekülfilme umfasst und eine amorphe Struktur aufweist; und
wobei das metallorganische Gerüst Zink enthält;
wobei das MOF mit einem oder mehreren Heteroatomen dotiert ist, die aus der Gruppe ausgewählt sind, die aus N, S und O besteht, und
wobei eine Dicke der MOF-Schicht 0,5 nm bis 20 nm beträgt.

2. Separator nach Anspruch 1, wobei das poröse Substrat eines oder mehrere umfasst, die aus der Gruppe ausgewählt sind, die aus Polyolefin, Polyester, Polyamid, Polyacetal, Polycarbonat, Polyimid, Polyetheretherketon, Polyethersulfon, Polyphenylenoxid, Polyphenylensulfid, Polyethylenphthalat, Polytetrafluorethylen, Polyvinylidenfluorid, Polyvinylchlorid, Polyacrylnitril, Cellulose, Nylon, Poly(p-phenylenbenzobisoxazol und Polyarylat besteht.

3. Verfahren zur Herstellung eines Separators für eine Lithium-Sekundärbatterie nach Anspruch 1, umfassend:
(S1) Bilden eines MOF-Molekülfilms durch Mischen einer wässrigen Lösung, die Zinkvorläufer enthält, und einer organischen Lösung, die organische Ligandenvorläufer enthält; und wobei
das MOF mit einem oder mehreren Heteroatomen dotiert ist, die aus der Gruppe ausgewählt sind, die aus N, S und O besteht, und
(S2) Abscheiden des MOF-Molekülfilms auf einer oder beiden Oberfläche(n) eines porösen Substrats,
wobei das Abscheiden des MOF-Molekülfilms durch das Langmuir-Blodgett-Verfahren durchgeführt wird, was zu der MOF-Schicht mit einer Dicke von 0,5 nm bis 20 nm führt.

4. Verfahren nach Anspruch 3, wobei der Zinkvorläufer einen oder mehrere umfasst, die aus der Gruppe ausgewählt sind, die aus Zinkacetat und Zinknitrat besteht.

5. Verfahren nach Anspruch 3, wobei der organische Ligandenvorläufer einen oder mehrere umfasst, die aus der Gruppe ausgewählt sind, die aus Terephthalsäure, 2-Aminoterephthalsäure, 2-Hydroxyterephthalsäure und 2,5-Dimercaptoterephthalsäure besteht.

6. Verfahren nach Anspruch 3, wobei das Mischen durch Tropfen der organischen Lösung, die durch Auflösen des organischen Ligandenvorläufers in einem organischen Lösungsmittel erhalten wird, in die wässrige Lösung, die den Zinkvorläufer enthält, durchgeführt wird.

7. Lithium-Sekundärbatterie, umfassend:
eine positive Elektrode;
eine negative Elektrode;
den Separator nach Anspruch 1 zwischen der positiven Elektrode und der negativen Elektrode; und
eine Elektrolytlösung.

8. Lithium-Sekundärbatterie nach Anspruch 1, wobei die Lithium-Sekundärbatterie eine Lithium-Schwefel-Sekundärbatterie ist.

## Revendications

1. Séparateur pour accumulateur au lithium, le séparateur comprenant :
un substrat poreux ; et
une couche d'un réseau métallo-organique (RMO) formée sur une ou sur les deux surfaces du substrat poreux,
où la couche de RMO comprend un ou plusieurs films moléculaires de RMO et présente une structure amorphe ; et
où le réseau métallo-organique contient du zinc ;
où le RMO est dopé avec un ou plusieurs hétéroatomes sélectionnés dans le groupe consistant en N, S et O et
où une épaisseur de la couche de RMO va de 0,5 nm à 20 nm.

2. Séparateur selon la revendication 1, où le substrat poreux comprend un ou plusieurs sélectionnés dans le groupe consistant en les suivants : polyoléfine, polyester, polyamide, polyacétal, polycarbonate, polyimide, polyétheréthercétone, polyéthersulfone, poly(oxyde de phénylène), poly(sulfure de phénylène), poly(naphtalate d'éthylène), polytétrafluoroéthylène, poly(fluorure de vinylidène), poly(chlorure de vinyle), polyacrylonitrile, cellulose, nylon, poly(p-phénylène benzobisoxazole) et polyarylate.

3. Procédé de fabrication d'un séparateur pour accumulateur au lithium selon la revendication 1, comprenant :
(S1) la formation d'un film moléculaire de RMO par mélange d'une solution aqueuse contenant des précurseurs de zinc et d'une solution organique contenant des précurseurs d'un ligand organique ;
où le RMO est dopé avec un ou plusieurs hétéroatomes sélectionnés dans le groupe consistant en N, S et O et
(S2) le dépôt du film moléculaire de RMO sur une ou sur les deux surfaces d'un substrat poreux,
où le dépôt du film moléculaire de RMO est effectué en utilisant la technique de Langmuir-Blodgett, résultant en une couche de RMO dont l'épaisseur va de 0,5 nm à 20 nm.

4. Procédé selon la revendication 3, où le précurseur de zinc comprend un ou plusieurs sélectionnés dans le groupe consistant en l'acétate de zinc et le nitrate de zinc.

5. Procédé selon la revendication 3, où le précurseur du ligand organique comprend un ou plusieurs sélectionnés dans le groupe consistant en l'acide téréphtalique, l'acide 2-aminotéréphtalique, l'acide 2-hydroxytéréphtalique et l'acide 2,5-dimercaptotéréphtalique.

6. Procédé selon la revendication 3, où le mélange est effectué par addition au goutte à goutte de la solution organique obtenue par dissolution du précurseur du ligand organique dans un solvant organique dans la solution aqueuse contenant le précurseur de zinc.

7. Accumulateur au lithium comprenant :
une électrode positive ;
une électrode négative ;
le séparateur de la revendication 1 entre l'électrode positive et l'électrode négative ; et
une solution électrolytique.

8. Accumulateur au lithium selon la revendication 1, où l'accumulateur au lithium est un accumulateur au lithiumsoufre.
